# EUROPEAN PATENT APPLICATION

(11) **EP 3 287 761 A1**
(43) Date of publication of application: **28.02.2018**
(21) Application number: 17186668.4
(22) Date of filing: 17.08.2017
(51) Int. Cl.: G01M 11/02

(54) **LENSMETER**

(30) Priority: 23.08.2016 JP 2016162366; 01.03.2017 JP 2017037963
(71) Applicant: Tomey Corporation, Nagoya-shi, Aichi 451-0051 (JP)
(72) Inventor: NAKATA, Yuichiro, Nagoya-shi Aichi 451-0051 (JP); KATO, Chihiro, Nagoya-shi Aichi 451-0051 (JP); AOKI, Nobuyori, Nagoya-shi Aichi 451-0051 (JP); BIAN, Guangchun, Nagoya-shi Aichi 451-0051 (JP); YAMAGISHI, Koji, Nagoya-shi Aichi 451-0051 (JP); GOTO, Yoshito, Nagoya-shi Aichi 451-0051 (JP)
(74) Representative: Daub, Thomas

(57) **Abstract**

A lensmeter includes a light emission portion, a light reception portion, a storage unit, a display unit and a display control unit. The light emission portion emits light so as to radiate the light onto a lens-to-be-inspected. The light reception portion receives the light transmitted through the lens-to-be-inspected to measure an optical characteristic of the lens-to-be-inspected. The storage unit stores a measured value of the optical characteristic of the lens-to-be-inspected. The display unit displays the measured value of the optical characteristic of the lens-to-be-inspected stored in the storage unit. The display control unit causes the display unit to display a target pattern including at least two different colors, and changes the target pattern in accordance with the measured value stored in the storage unit.

## Description

### BACKGROUND

The present invention relates to a lensmeter which can measure, for example, an optical characteristic such as spherical lens power of a spectacle lens, a contact lens, etc.

In order to correct vision of presbyopia or reduce eyestrain during work using a personal computer, various progressive refractive power lenses have been heretofore commercially available on the market. Such a progressive refractive power lens has hidden marks provided for identifying a manufacture of the lens in addition to a value of addition of the lens or for laying out the lens on a spectacle frame. The hidden marks are machined as slight protrusions or slight recesses in the progressive refractive power lens. Accordingly, it is normally difficult to visually recognize the hidden marks. Therefore, skill is required for the visual recognition of the hidden marks.

A device which radiates a target pattern onto a spectacle lens to thereby detect a hidden mark of the spectacle lens has been disclosed in Patent Literature 1. The target pattern consists of a pattern in which opaque squares and transparent squares are arranged alternately. When the target pattern is radiated onto the spectacle lens, a direction of light rays travelling across a region (hidden mark) having slight refractive power is deviated so that the hidden mark can be viewed as a bright region against a dark background or as a dark region against a bright background.

[Patent Literature 1] Japanese Patent No. 3133430

### SUMMARY

One object of the invention is to provide a lensmeter by which control can be made to enlarge or reduce a pitch of a target pattern displayed on a monitor in accordance with a measured value of refractive power of a lens-to-be-inspected so that a hidden mark of the lens-to-be-inspected can be always visually recognized on a most suitable condition.

According to one advantageous aspect of the present invention, there is provided a lensmeter including:
a light emission portion configured to emit light so as to radiate the light onto a lens-to-be-inspected;
a light reception portion configured to receive the light transmitted through the lens-to-be-inspected to measure an optical characteristic of the lens-to-be-inspected;
a storage unit configured to store a measured value of the optical characteristic of the lens-to-be-inspected;
a display unit configured to display the measured value of the optical characteristic of the lens-to-be-inspected stored in the storage unit; and
a display control unit configured to cause the display unit to display a target pattern including at least two different colors, and configured to change the target pattern in accordance with the measured value stored in the storage unit.

The target pattern may have an arrangement pattern in which the colors are arranged alternately. The display control unit may be configured at least one of to enlarge and to reduce a pitch of the colors in the target pattern in accordance with the measured value stored in the storage unit.

The arrangement pattern may include a checkerboard pattern. The arrangement pattern may include a grid pattern. The arrangement pattern may include a stripe pattern.

The display control unit may be configured to switch an arrangement pattern of the target pattern.

### BRIEF DESCRIPTION OF DRAWINGS

Fig. 1 is a block diagram explaining an overall configuration of a lensmeter according to an embodiment of the invention.
Fig. 2 is a view explaining an optical system of the lensmeter according to the embodiment of the invention.
Figs. 3A and 3B are views explaining examples of a pattern plate used in the lensmeter according to the embodiment of the invention.
Fig. 4 is a chart explaining an operation flow of the lensmeter according to the embodiment of the invention.
Fig. 5A is a view explaining a display screen of measured values displayed on a monitor of the lensmeter according to the embodiment of the invention, and Fig. 5B is a view explaining an example of a display screen of a checkerboard pattern as a target pattern.
Figs. 6A and 6B are views explaining control of pitches in the checkerboard pattern displayed on the monitor of the lensmeter according to the embodiment of the invention.
Fig. 7 is a view explaining a display screen of a grid pattern as another example of the target pattern displayed on the monitor of the lensmeter according to the embodiment of the invention.
Fig. 8A is a view explaining a display screen of a stripe pattern (vertical), and Fig. 8B is a view explaining a display screen of a stripe pattern (horizontal), as other examples of the target pattern displayed on the monitor of the lensmeter according to the embodiment of the invention.

### DETAILED DESCRIPTION OF EXEMPLIFIED EMBODIMENTS

Patent Literature 1 discloses the hidden mark detecting device by which the hidden mark can be simply visually recognized as described above. However, the device disclosed in Patent Literature 1 is a device for only detecting the hidden mark. It is necessary to separately prepare a lensmeter in order to measure an optical characteristic such as a value of refractive power of a progressive refractive power lens which is a lens-to-be-inspected.

In addition, a pitch of the target pattern is important for detecting the hidden mark. When the target pattern is radiated on the lens-to-be-inspected, the pitch of the target pattern is enlarged or reduced in accordance with the refractive power of the lens-to-be-inspected. Therefore, there is a problem that the hidden mark may be unable to be detected on a most suitable condition.

The invention has been accomplished in order to solve the aforementioned problem. One object of the invention is to provide a lensmeter by which control can be made to enlarge or reduce a pitch of a target pattern displayed on a monitor in accordance with a measured value of refractive power of a lens-to-be-inspected so that a hidden mark of the lens-to-be-inspected can be always visually recognized on a most suitable condition.

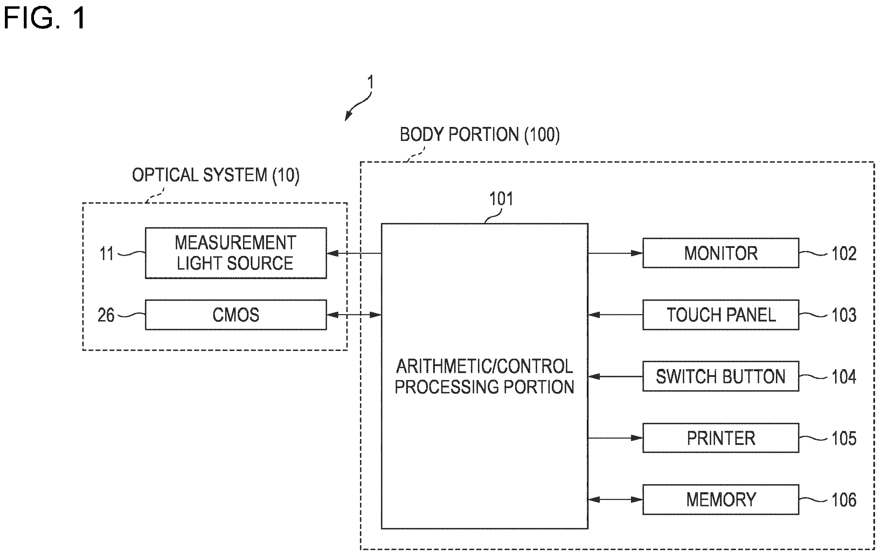

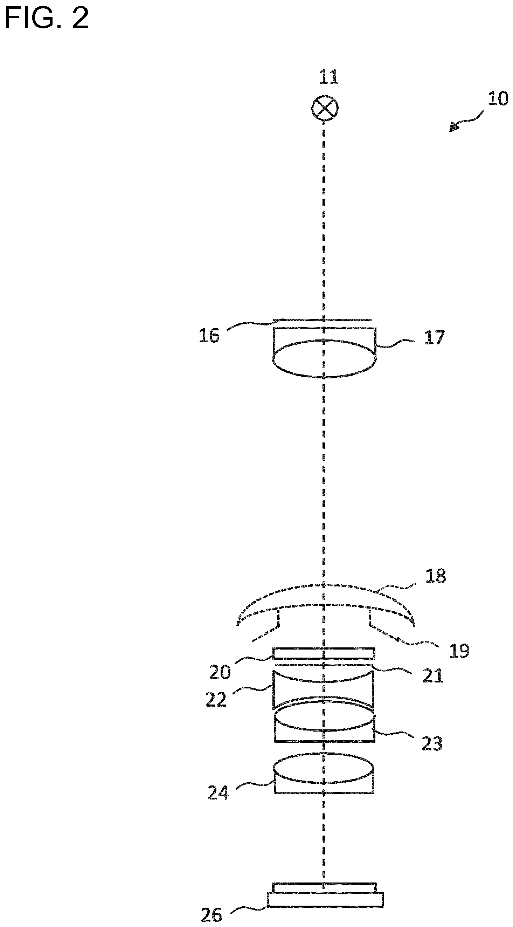

A lensmeter 1 according to an embodiment of the invention will be described below with reference to Fig. 1 and Fig. 2. Fig. 1 is a block diagram showing an overall configuration of the lensmeter 1 according to the embodiment of the invention. Fig. 2 is a view showing an optical system of the lensmeter 1 according to the embodiment of the invention.

As shown in Fig. 1, the lensmeter 1 according to the embodiment is constituted by the optical system 10 and a body portion 100. The optical system 10 is constituted by a measurement light source 11 and an RGB type CMOS image sensor 26 for measuring refractive power of a lens-to-be-inspected, etc.

The body portion 100 is constituted by an arithmetic/control processing portion 101, a monitor 102, a touch panel 103, a switch button 104, a printer 105, a memory 106, etc. Control of turning ON/OFF of the measurement light source 11 or control of the CMOS image sensor 26 is performed in accordance with a control signal from the arithmetic/control processing portion 101. In addition, image data acquired by the CMOS image sensor 26 are inputted to the arithmetic/control processing portion 101. Upon reception of image data, the arithmetic/control processing portion 101 applies arithmetic processing to the image data to thereby calculate a value etc. of the refractive power of the lens-to-be-inspected. The arithmetic/control processing portion 101 stores the calculated result in the memory 106 and displays it on the monitor 102.

Next, the optical system 10 will be described with reference to Fig. 2. The optical system 10 is constituted by a light emission portion and a light reception portion. The light emission portion is provided with the measurement light source 11 etc. The light reception portion is provided with the CMOS image sensor 26 etc.

In the embodiment, for example, a green LED whose wavelength is 535 nm is used as the measurement light source 11. Refractive power of a spectacle lens is valued using a d line (587.56 nm) or an e line (546.07 nm) which serves as a reference wavelength. In the embodiment, the green light having the wavelength of 535 nm near to each of the reference wavelengths of the d line and the e line is used. However, the invention is not limited thereto. A red LED longer in wavelength than the green light may be used. An error caused by a difference between the green light or the red light and the reference wavelength can be corrected by calibration work using a reference lens.

The green light (hereinafter referred to as "measurement light") emitted from the measurement light source 11 is incident on a diaphragm 16 and a collimator lens 17. The diaphragm 16 is made of a thin flat plate provided with a circular through hole. The diaphragm 16 serves for limiting the diameter of luminous flux of light to be radiated onto a lens-to-be-inspected 18. When the diameter of the luminous flux of the light to be radiated onto the lens-to-be-inspected 18 is too large, there is a fear that the light may be radiated onto another constituent component (not shown) disposed between the collimator lens 17 and the lens-to-be-inspected 18 and the light reflected from the other constituent component may enter the lens-to-be-inspected 18. The diaphragm 16 limits the diameter of the luminous flux of the light to be radiated onto the lens-to-be-inspected 18 so that the light reflected from the other constituent component can be prevented from entering the lens-to-be-inspected 18.

In addition, the measurement light source 11 is disposed in a position corresponding to a back focal length (back focus) of the collimator lens 17. Thus, the measurement light is converted to parallel light by the collimator lens 17 and radiated vertically onto the lens-to-be-inspected 18. Incidentally, a lens receptacle 19 is a stand for mounting the lens-to-be-inspected 18 thereon. The lens-to-be-inspected 18 is disposed at a fixed distance from the CMOS image sensor 26 due to the lens receptacle 19 so that an optical characteristic such as the refractive power can be measured. The CMOS image sensor 26 is a light reception element.

The measurement light transmitted through the lens-to-be-inspected 18 is incident on a cover glass 20, a pattern plate 21, and condensing lenses 22, 23, and 24. Then, the measurement light is incident on the CMOS image sensor 26.

Here, the cover glass 20 is a flat plate-like plate glass which is disposed in order to protect the light reception portion from dust etc. In the embodiment, multicoating for preventing reflection is applied to both an upper surface and a lower surface of the cover glass 20 so that the measurement light which has been transmitted through the lens-to-be-inspected 18 can be transmitted through the cover glass 20 at nearly 100% transmittance. Incidentally, the multicoating is not essential. However, proper coating for preventing reflection may be applied to the cover glass 20 suitably if occasions demand.

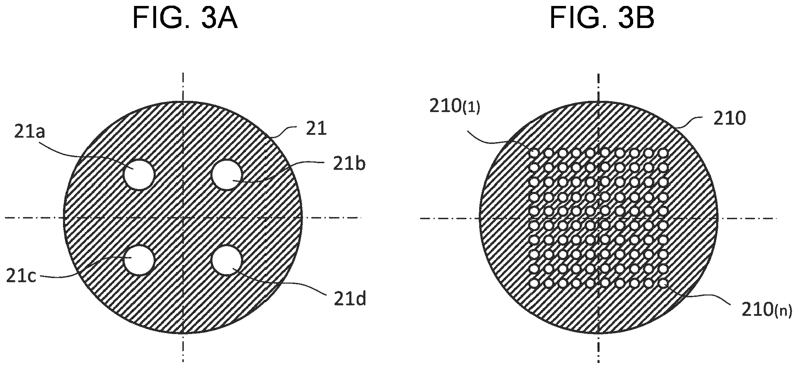

A circular plate-like flat plate provided with four circular through holes 21a, 21b, 21c and 21d, for example, with vertexes of a square as their centers, as shown in Fig. 3A can be used as the pattern plate 21. The measurement light which has been transmitted through the lens-to-be-inspected 18 is refracted in accordance with the refractive power of the lens-to-be-inspected 18 and incident on the pattern plate 21 so as to be separated into four lights. The four separated lights are condensed by the condensing lenses 22, 23 and 24, and form an image on one of light receiving surfaces of the CMOS image sensor 26.

Positions where the four lights form the image on the light receiving surface of the CMOS image sensor 26 change in accordance with the refractive power of the lens-to-be-inspected 18. Accordingly, gravity center positions (coordinate positions) of the four lights are calculated from the image data of the CMOS image sensor 26. Thus, a value of the refractive power of the lens-to-be-inspected 18 can be calculated. A method for calculating values of optical characteristics such as spherical refractive power S, cylindrical refractive power C, an astigmatic angle A, etc. from the four coordinate positions has been disclosed in Japanese Patent No. 3150404 etc. Hence, details about the method will be omitted here.

In addition, the measurement light in the embodiment is the green light as described above. Therefore, an electric signal received by a G light receiving surface, of an R light receiving surface (red), the G light receiving surface (green) and a B light receiving surface (blue) of the CMOS image sensor 26, is selectively extracted and processed by the arithmetic/control processing portion 101. Thus, an optical characteristic such as the refractive power of the lens-to-be-inspected 18 can be acquired. That is, when the RGB type CMOS image sensor 26 is used as the light reception element as in the embodiment, it is unnecessary to dispose a filter etc. for selectively receiving the measurement light.

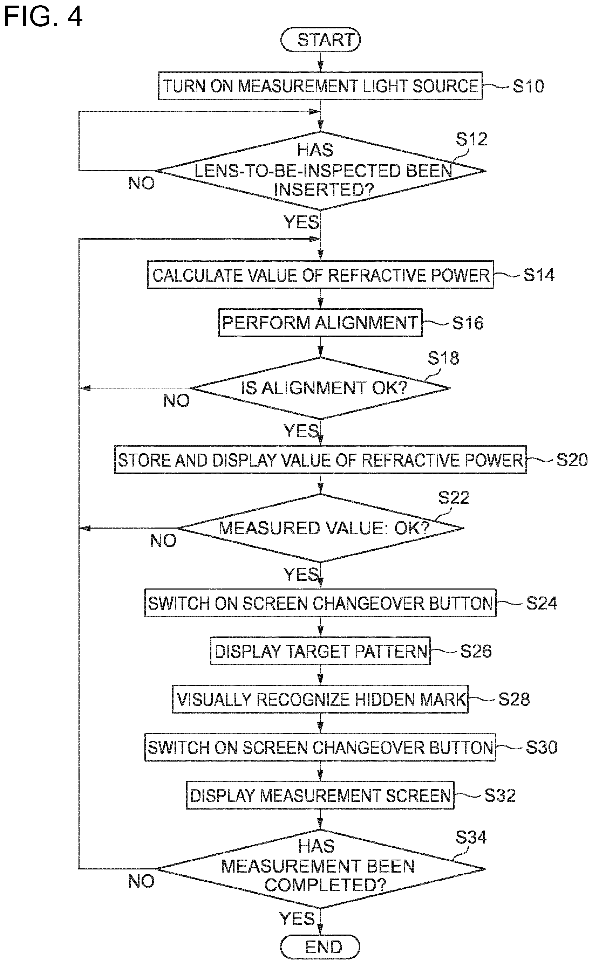

Next, an operation method in the embodiment will be described with reference to Fig. 4. Fig. 4 shows an example of an operation flow of the lensmeter according to the embodiment of the invention.

First, in a step S10, the measurement light source 11 is turned ON. As soon as a lens-to-be-inspected is mounted on the lens receptacle 19 (Y) in a step S12, calculation of refractive power of the lens-to-be-inspected 18 is started in a step S14. After the lens-to-be-inspected 18 has been inserted, the calculation of the refractive power of the lens-to-be-inspected 18 can be performed at any time. Whenever the refractive power of the lens-to-be-inspected 18 is calculated, the calculated result is stored in the memory 106 and displayed on the monitor 102.

The operation flow goes to a step S16, in which alignment is performed. The alignment is performed to move the lens-to-be-inspected 18 left and right or back and forth in a state in which the lens-to-be-inspected 18 has been mounted on the lens receptacle 19, so that an optical center of the lens-to-be-inspected 18 can come to a measurement optical axis. Specifically, the alignment is performed to move the lens-to-be-inspected so that a target displayed on the monitor 102 can come to a coordinate center.

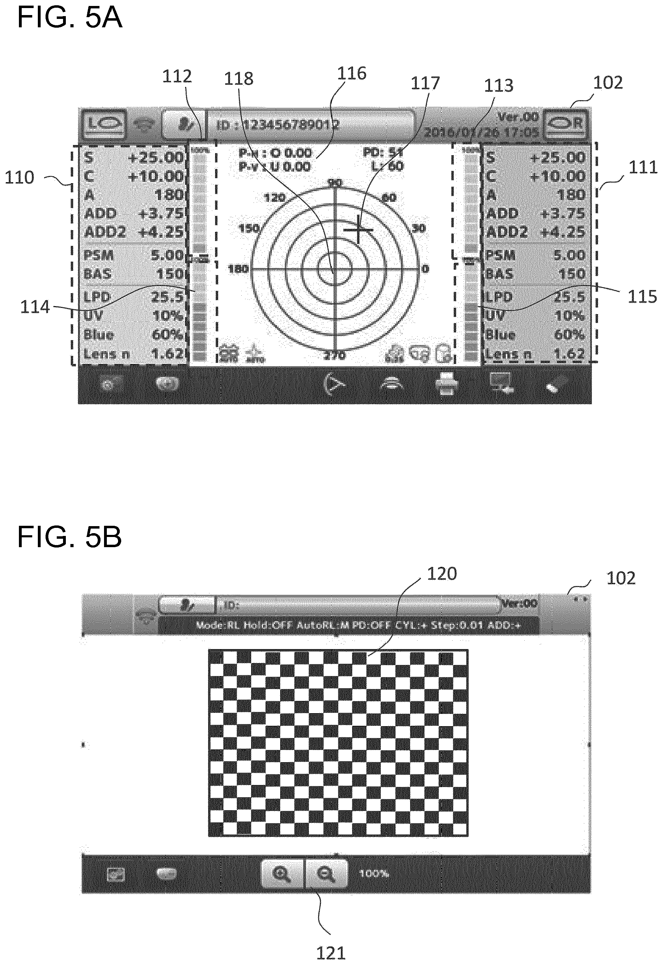

Fig. 5A is an example of a measurement screen displayed on the monitor 102 of the lensmeter 1. A target area 116 is displayed in a central portion of the screen, and a target mark (+) 117 is displayed in the target area 116. The target mark (+) 117 expresses the position of the optical center of the lens-to-be-inspected 18. A center 118 of the target area 116 expresses a center of an optical axis of the optical system 10. An operator performs the alignment to move the lens-to-be-inspected 18 left and right or back and forth in a state in which the lens-to-be-inspected 18 has been mounted on the lens receptacle 19 so that the target mark (+) 117 displayed on the monitor 102 can come to the center 118 of the target area 116.

In a step S18, it is determined whether the alignment has been completed or not. When the alignment has been completed (Y: alignment OK), a value of the refractive power of the lens-to-be-inspected 18 obtained when the alignment has been completed is stored in the memory 106 and displayed on the monitor 102 in a step S20. When the alignment has not been completed yet (N: alignment NG), the operation flow returns to the step S14, in which the refractive power of the lens-to-be-inspected 18 is calculated again.

In a step S22, the value of the refractive power of the lens-to-be-inspected 18 displayed on the monitor 102 is checked. When it is determined that the value of the refractive power of the lens-to-be-inspected 18 is OK (Y: measured value OK), the operation flow goes to a step S24. When there is a problem in the displayed value of the refractive power of the lens-to-be-inspected 18 (N: measurement NG), the operation flow returns to the step S14, in which the refractive power of the lens-to-be-inspected is calculated again.

In the step S24, the switch button 104 which is a screen changeover button is pressed. When the switch button 104 is pressed, a target pattern for visually recognizing a hidden mark of the lens-to-be-inspected 18 is displayed on the monitor 102 in a step S26. The target pattern has an arrangement pattern in which the colors are arranged alternately. The embodiment will be described in a case where a checkerboard pattern 120 in which white squares and black squares are arranged alternately is used as an example of the target pattern, as shown in Fig. 5B.

Here, each of pitches of the white and black squares displayed on the monitor 102 is calculated and determined by the arithmetic/control processing portion 101 based on the value of the refractive power of the lens-to-be-inspected 18 stored in the memory 106 in the step S20. The hidden mark is visually recognized when the lens-to-be-inspected 18 is disposed in front of the monitor 102 on which the checkerboard pattern 120 is displayed and the checkerboard pattern 120 is viewed through the lens-to-be-inspected 18. The checkerboard pattern 120 viewed through the lens-to-be-inspected 18 is enlarged or reduced by the refractive power of the lens-to-be-inspected 18. Accordingly, the hidden mark cannot be visually recognized at the fixed pitches. Therefore, in the embodiment, the pitches of the white and black squares are determined based on the measured value of the refractive power of the lens-to-be-inspected 18 and displayed on the monitor 102 so that the pitches in the checkerboard pattern 120 viewed through the lens-to-be-inspected 18 can be always fixed.

In a step S28, the hidden mark made on the lens-to-be-inspected 18 is visually recognized. The hidden mark can be visually recognized when the checkerboard pattern 120 displayed on the monitor 102 is viewed through the lens-to-be-inspected 18 as described above. That is, the hidden mark can be visually recognized as a dark region against a bright background (white squares) or as a bright region against a dark background (black squares).

When the visual recognition of the hidden mark has been completed, the switch button 104 is pressed again in a step S30. When the switch button 104 is pressed, the measurement screen shown in Fig. 5A is displayed on the monitor 102 again in a step S32.

In a step S34, it is determined whether the measurement has been completed or not. When the measurement has been completed (Y), the operation is completed. When the measurement is made again (N), the operation flow returns to the step S14, in which the refractive power of the lens-to-be-inspected 18 is calculated again.

Incidentally, the screen displays shown in Figs. 5A and 5B are merely exemplary. The invention is not limited thereto but may be configured in any manner as long as the most suitable screen display can be displayed on the monitor 102 properly.

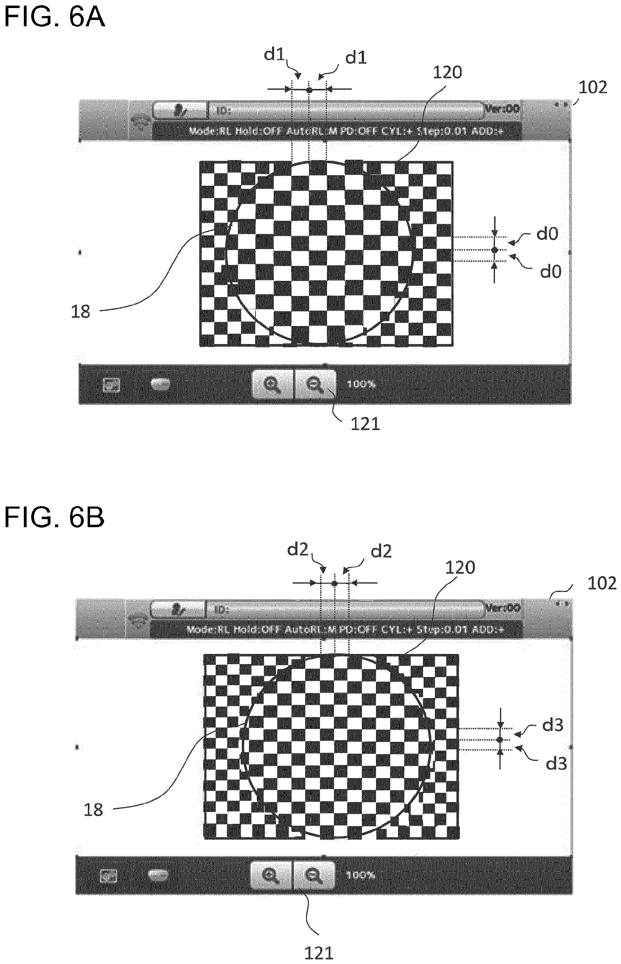

Figs. 6A and 6B are views explaining control of pitches in a checkerboard pattern displayed on the monitor of the lensmeter according to the embodiment of the invention. Most suitable pitches d0, d0 of white and black squares of the checkerboard pattern 120 displayed on the monitor 102 in Fig. 6A are set at most suitable values for visual recognition of the hidden mark. When, for example, the lens-to-be-inspected 18 is a convex lens having positive refractive power, pitches d1, d1 in the checkerboard pattern 120 which can be viewed through the lens-to-be-inspected 18 are larger than the pitches d0, d0 (d1 >d0), as shown in Fig. 6A.

In the embodiment, pitches d3, d3 of the white and black squares in the checkerboard pattern 120 are reduced (d3<d0) and displayed on the monitor 102 so that the pitches d2, d2 in the checkerboard pattern 120 which can be viewed through the lens-to-be-inspected 18 are equal to the most suitable pitches d0, d0 (d2=d0), as shown in Fig. 6B. Here, the pitches d3, d3 of the white and black squares in the checkerboard pattern 120 displayed on the monitor 102 are calculated by the arithmetic/control processing portion 101 based on the measured value of the refractive power of the lens-to-be-inspected 18, as described above.

According to the embodiment as described above, the hidden mark can be visually recognized in a state in which the pitches of the white and black squares are the most suitable regardless of the refractive power of the lens-to-be-inspected 18.

Here, the lensmeter 1 is an example of the lensmeter. The lens-to-be-inspected 18 is an example of the lens-to-be-inspected. The memory 106 is an example of the storage unit. The monitor 102 is an example of the display unit. The checkerboard pattern 120 is an example of the target pattern.

Incidentally, the technical scope of the invention is not limited to the aforementioned embodiment but various changes may be added to the invention without departing from the gist of the invention. For example, the invention is not limited to the aforementioned embodiment to which the invention is applied, but may be applied to any embodiment in which these embodiments are used in combination suitably. The invention is not limited particularly.

For example, in the aforementioned embodiment, the pattern plate having four holes as shown in Fig. 3A is used as the pattern plate 21. The pattern plate is not limited thereto. For example, a Hartmann plate provided with a large number of through holes as in a pattern plate 210 shown in Fig. 3B may be used. Further, although not shown in the description of the invention, a circular pattern may be used. That is, various patterns disclosed in the Patent Literature can be used.

In addition, in the aforementioned embodiment, the checkerboard pattern 120 having the white and black quadrilaterals is displayed on the monitor 102. However, the colors of the quadrilaterals in the checkerboard pattern 120 are not limited to white and black. Various color combinations may be used as long as a bright color and a dark color are combined. Further, three or more colors may be combined. Various color combinations may be used as long as colors can be arranged effectively in visual recognition.

In addition, in the aforementioned embodiment, each of the pitches d0, d0 of the white and black quadrilaterals is set at the most suitable value. However, the pitches d0, d0 are not limited to one value. The value of each of the pitches d0, d0 may be adjusted in accordance with the size of the hidden mark or the degree of a protrusion or a recess. For example, the value of each of the pitches d0, d0 may be adjusted by an enlarge/reduce button 121 in Fig. 5B or may be adjusted by swiping, pinching-out or pinching-in on the monitor.

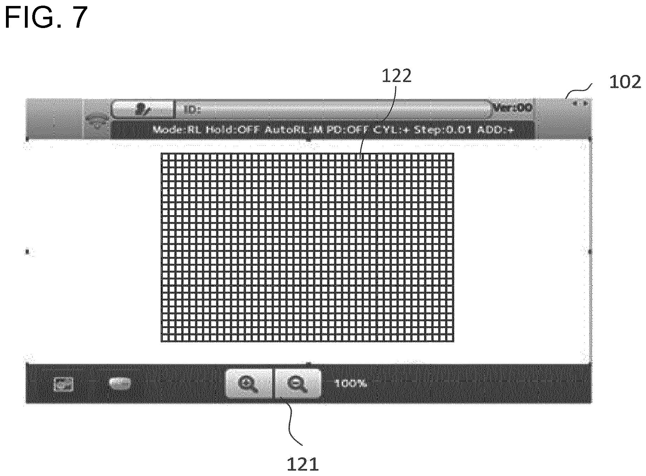

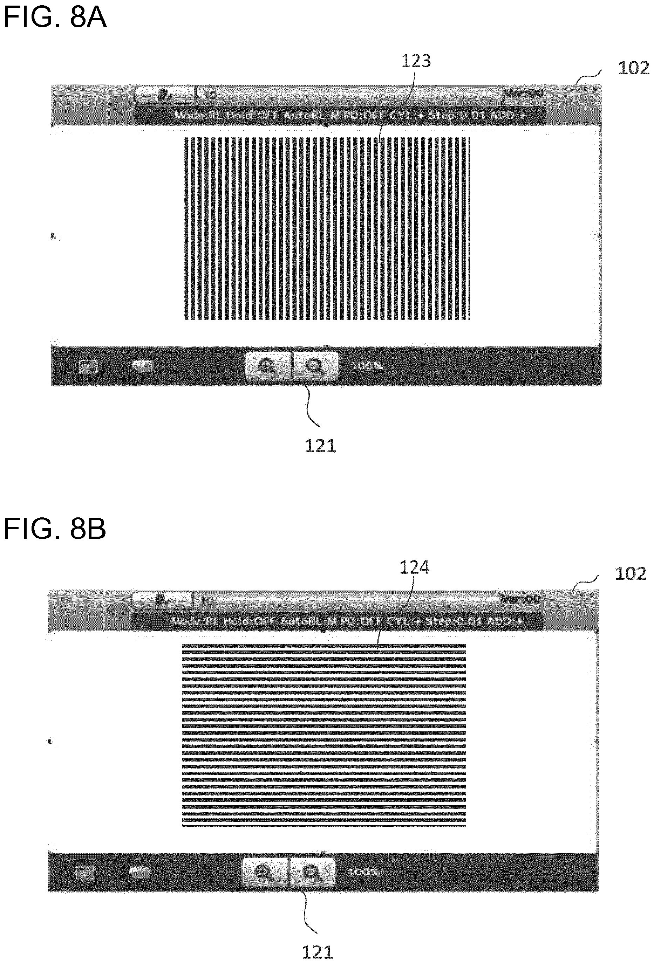

In addition, in the aforementioned embodiment, the checkerboard pattern 120 in which the squares shown in Fig. 5B are arranged alternately is displayed as an example of the target pattern on the monitor 102. However, an arrangement patter of the target pattern is not limited thereto. For example, each of the cells of the checkerboard pattern 120 may be formed into not a square but a rectangle. In addition, the arrangement patter of the target pattern may be a grid pattern 122 shown in Fig. 7, or may be a stripe pattern 123 shown in Fig. 8A or a stripe pattern 124 shown in Fig. 8B.

Further, the arithmetic/control processing portion 101 may be configured to switch the arrangement pattern of the target pattern. The target pattern suitable for the visual recognition of the hidden mark for respective operator depends on the accommodation ability and the degree of astigmatism of the respective operator. Further, the target pattern suitable for the visual recognition of the hidden mark depends on a type and the value of refractive power of the lens-to-be-inspected. Therefore, by the arithmetic/control processing portion 101 as above, the operator can choose the target pattern which is the most suitable for the visual recognition of the hidden mark, so that it can be easy to find the hidden mark.

In addition, each of the target patterns shown in Fig. 5B, Fig. 7, Fig. 8A and Fig. 8B is formed as a pattern having a boundary in a vertical or horizontal direction to an up/down direction of the monitor 102. However, the target pattern is not limited thereto but may be formed as a pattern having a boundary in an inclination direction.

In the lensmeter according to the invention, the target pattern including the at least two different colors for detecting a hidden mark of the lens-to-be-inspected is displayed by the display unit (monitor) belonging to the lensmeter. With the configuration, a device for only detecting the hidden mark as disclosed in Patent Literature 1 is therefore dispensed with.

In addition, the pitch of the target pattern is controlled to be enlarged and reduced in accordance with the measured value of the optical characteristic of the lens-to-be-inspected. Accordingly, it is possible to always detect the hidden mark of the lens-to-be-inspected on the most suitable condition (the target pattern having the most suitable pitch).

## Claims

1. A lensmeter comprising:
a light emission portion configured to emit light so as to radiate the light onto a lens-to-be-inspected;
a light reception portion configured to receive the light transmitted through the lens-to-be-inspected to measure an optical characteristic of the lens-to-be-inspected;
a storage unit configured to store a measured value of the optical characteristic of the lens-to-be-inspected;
a display unit configured to display the measured value of the optical characteristic of the lens-to-be-inspected stored in the storage unit; and
a display control unit configured to cause the display unit to display a target pattern including at least two different colors, and configured to change the target pattern in accordance with the measured value stored in the storage unit.

2. The lensmeter according to Claim 1, wherein
the target pattern has an arrangement pattern in which the colors are arranged alternately, and
the display control unit is configured at least one of to enlarge and to reduce a pitch of the colors in the target pattern in accordance with the measured value stored in the storage unit.

3. The lensmeter according to Claim 2, wherein the arrangement pattern includes a checkerboard pattern.

4. The lensmeter according to Claim 2, wherein the arrangement pattern includes a grid pattern.

5. The lensmeter according to Claim 2, wherein the arrangement pattern includes a stripe pattern.

6. The lensmeter according to any one of Claims 1 to 5, wherein
the display control unit is configured to switch an arrangement pattern of the target pattern.
